# FASCICULE DE BREVET EUROPEEN

(11) **EP 2 407 716 B1**
(45) Date de publication et mention de la délivrance du brevet: **11.02.2015**
(21) Numéro de dépôt: 11173079.2
(22) Date de dépôt: 07.07.2011
(51) Int. Cl.: F23D 14/22, F23G 7/06, C01B 17/04

(54) **Brûleur pour le traitement d'un gaz acide combustible, four à réaction adapté et procédé**
Brenner für die Aufbereitung von brennbarem saurem Gas, entsprechend angepasster Reaktionsofen und Prozess
Burner for treating a combustible acid gas, adapted reaction furnace and process

(30) Priorité: 13.07.2010 FR 1055708
(43) Date de publication de la demande: 18.01.2012
(73) Titulaire: Fives Pillard, 13008 Marseille (FR)
(72) Inventeur: Dufau-Sansot, Cyril, 13100 Aix en Provence (FR); Ricci, Louis, 13830 Roquefort la Bedoule (FR)
(74) Mandataire: Novagraaf Technologies

(56) Documents cités:
- DE-A1- 2 730 966
- FR-A1- 2 393 763
- GB-A- 1 565 133
- JP-A- 59 167 624
- US-A- 5 009 174

## Description

L'invention concerne un brûleur pour le traitement d'au moins un gaz acide combustible, ainsi qu'un procédé permettant un traitement d'un gaz acide combustible, avec réalisation d'un tel brûleur.

Est également concerné un procédé de cette nature, permettant une combustion combinée, en présence d'au moins un gaz combustible d'appoint et d'air comburant.

Dans la demande, on appelle « gaz acide »(ou gaz acide à traiter ou gaz acide combustible...), tout gaz ayant une teneur en gaz H₂S ≥ 10%.

Le « traitement » cité ci-dessus est une destruction, ou conversion, d'au moins un composé chimique en un autre moins polluant ou plus valorisable.

Dans le domaine, en référence à JP-A- 59 167624, on connaît au moins un brûleur présentant un axe central et comprenant :
- un ouvreau (pouvant également être dénommé préchambre ou avant-foyer ou muffle ou refractory quarl ou precombustion chamber en anglais) et, communiquant avec lui :
- une enceinte au sein de laquelle est apporté de l'air comburant sous pression,
- au moins un conduit d'apport de gaz acide combustible à traiter, traversant ladite enceinte et débouchant sur l'ouvreau, de façon sensiblement centrale, pour y délivrer un flux de gaz acide sensiblement ou principalement axialement, et,
- des moyens d'apport d'au moins un gaz combustible d'appoint, traversant ladite enceinte et débouchant sur l'ouvreau, lesdits moyens d'apport comprenant des tubes d'apport de ce gaz disposés autour du(des) conduit(s) d'apport du gaz acide à traiter et débouchant ainsi sur l'ouvreau, afin d'y délivrer un flux de gaz combustible d'appoint autour du flux de gaz acide.

Un problème qui se pose concerne la qualité de combustion, ou plus généralement de certaines au moins des réactions en cause, et donc la manière de réaliser le brûleur en conséquence.

En effet, pour traiter un gaz acide combustible, notamment en combustion combinée, les inconvénients suivants ont été notés,
- création de suies liées à une part de combustion incomplète,
- et/ou augmentation du débit des fumées produites par le traitement,
- voire création d'espèces chimiques secondaires qui peuvent diminuer la cinétique des réactions souhaitées pour mener à bien le traitement.

Ceci est en particulier vrai en cas de combustion combinée (en anglais « cofiring »).

En vu de tendre vers une solution à une partie au moins du problème ci-dessus mentionné, et vers au moins une limitation des inconvénients cités, il est conseillé que, sur le brûleur proposé, les tubes d'apport du gaz combustible d'appoint sont traversés par des orifices de sortie de ce gaz qui sont disposés pour que le gaz combustible d'appoint sorte au moins majoritairement en direction de la paroi périphérique.

En termes de performance de la destruction du gaz acide à traiter, ceci sera en particulier performant sur une unité de traitement utilisant le procédé Claus (en lui-même connu).

De préférence, les tubes d'apport de gaz combustible d'appoint seront au nombre d'au moins trois, chacun de section inférieure à celle du(des) conduit(s) d'apport du gaz acide à traiter.

Pour favoriser de la turbulence (notamment) dans l'ouvreau en réalisant des remous d'accrochage de flamme et aider ainsi le traitement, on recommande par ailleurs que ledit conduit d'apport du gaz acide à traiter comprenne :
- un premier conduit central dans lequel du gaz acide à traiter peut circuler, et
- un second conduit périphérique à l'intérieur duquel passe ledit premier conduit et dans lequel du gaz acide à traiter peut circuler.

Dans le même but, il est en outre conseillé que, radialement, les tubes d'apport du gaz combustible d'appoint s'étendent (localement) entre des ailettes périphériques de mise en mouvement tourbillonnaire du flux comburant d'air et que le conduit d'apport de gaz acide, les ailettes pouvant en particulier être organisées en une série d'ailettes fixes formant un anneau localement, en périphérie de l'enceinte qui apporte l'air.

Un autre conseil est que ces orifices de sortie de gaz d'appoint qui traversent les tubes d'apport soient majoritairement (voire en totalité) situés d'un même côté d'un plan passant par ladite parallèle à l'axe central du brûleur.

Dans ce contexte, on conseille en pratique, en particulier dans le cadre d'une combustion combinée, que lesdits orifices de sortie du gaz combustible d'appoint soient orientés:
- au moins pour certains, et de préférence majoritairement, transversalement par rapport à une parallèle à l'axe central, en direction de ladite paroi périphérique et vers l'aval par rapport au sens de circulation des flux de gaz qui sont apportés, et/ou
- soient au nombre d'au moins deux par conduit, chacun orienté sensiblement radialement au conduit qu'il traverse.

« Transversalement » a pour sens de biais (angle 5° < α < 90°) ou perpendiculaire (α ≈ 90°) à ladite parallèle à l'axe central du brûleur.

Concernant le procédé de traitement du gaz acide à traiter visant à permettre pour cela une combustion combinée, il est prévu qu'il intervienne en présence d'au moins un gaz combustible d'appoint et d'air comburant apportés dans l'ouvreau du brûleur, vers la zone combustion ou réaction. On apportera le flux d'air comburant autour du flux de gaz acide à traiter et le flux de gaz combustible d'appoint autour du flux de gaz acide à traiter. Et on fera sortir le gaz combustible d'appoint au moins majoritairement en direction de la paroi périphérique de l'ouvreau.

On conseille que le traitement intervienne en présence d'un dosage sous-stoechiométrique entre la quantité en volume d'H₂S contenu dans le gaz acide et celle d'O₂ dans l'air apporté.

Dans le cadre de ce traitement, on peut d'ailleurs aussi recommander ce qui suit :
- on apporte du gaz acide à traiter à travers au moins un conduit d'apport de ce gaz traversant une enceinte au sein de laquelle est apporté de l'air comburant et débouchant sur un l'ouvreau,
- on apporte vers l'ouvreau un gaz combustible d'appoint, apporté par des tubes traversant ladite enceinte, à l'écart du(des) conduit(s) d'apport de gaz acide à traiter,
- on fait déboucher l'air comburant issu de ladite enceinte sur l'ouvreau autour du(des) conduit(s) d'apport de gaz acide à traiter, avec ledit dosage sous-stoechiométrique entre la quantité en volume d'H2S contenu dans le gaz acide et celle d'O2 dans l'air apportés.

En vue de renforcer encore cette tendance, on conseille:
- d'apporter le gaz acide à traiter dans un premier conduit central et dans un second conduit périphérique à l'intérieur duquel passera ledit premier conduit et dans lequel du gaz acide à traiter circulera à une pression ou une vitesse d'éjection plus faible que dans le premier conduit central, et/ou,
- de faire circuler du gaz à une vitesse comprise entre 70 m/s et 200 m/s dans le second conduit périphérique, tandis que ans le premier conduit on fera circuler du gaz à une vitesse comprise entre 20 m/s et à 100 m/s, et/ou
- d'apporter le gaz combustible d'appoint avec un débit dans chaque tube d'apport de ce gaz égal à moins de 2% du débit total de gaz acide apporté, et/ou
- d'apporter le gaz combustible d'appoint avec un débit total dans l'ensemble des tubes d'apport de ce gaz égal à moins de 7% du débit total de gaz acide apporté.

Concernant les 2% et moins de débit dans chaque tube d'apport du gaz combustible rapporté au débit total de gaz acide apporté, il s'agit de la quantité de gaz d'appoint suffisante et nécessaire pour :
- assurer une température suffisante dans la chambre de combustion réaction
- permettre une combustion étagée avec le gaz d'appoint (issu desdits tubes) en excès d'air (comburant), et le gaz acide (issu du conduit central) en manque d'air (sous-stoechiométrie), ceci en limitant les interférences spatiales entre ces deux zones de combustion.

En d'autres termes, ces 2% et moins de gaz combustible d'appoint sont favorablement utiles pour favoriser une combustion en excès d'air du gaz d'appoint.

En particulier dans le cadre de la mise en oeuvre du procédé Claus de destruction d'hydrogène sulfuré, on recommande par ailleurs d'apporter comme flux de gaz acide à traiter au moins un flux de gaz comprenant entre 20% et 100% en volume de H₂S, entre 0% et 80% en volume de CO₂, et entre 0% et 5% en volume d'au moins un autre gaz qui ne sera favorablement ni de l'air comburant, ni le gaz combustible d'appoint, lequel pourra typiquement être, ou contenir majoritairement, du gaz naturel ou du gaz de raffinerie (fuel gaz), du butane ou du propane.

A titre alternatif, on conseille d'apporter dans lesdits tubes au moins un gaz complémentaire, non mélangé au gaz acide et qui ne sera donc ni de l'air comburant, ni le gaz combustible d'appoint.

Dans certaines applications du procédé, on brûlera ainsi d'autres gaz que le gaz combustible d'appoint ou du gaz acide. Ce(s) autre(s) gaz (ci-avant « gaz complémentaire ») représente(nt) généralement quelques % en volume (souvent 0 à 5%). Idéalement ces autres gaz (par exemple gaz chargé en NH3) devront être injectés par lesdits tubes, si ces gaz complémentaire ne sont pas déjà mélangés en amont au gaz acide. Si ces autres gaz sont injectés les tubes précités, leur combustion se fera a priori en excès d'air ce qui facilitera leur destruction. L'intérêt à injecter ce(s) gaz complémentaire(s) par les tubes est donc de favoriser la combustion étagée attendue.

Concernant maintenant l'aspect suivant de l'invention visant toujours à tendre vers une solution à une partie au moins du problème pré-mentionné, et vers au moins une limitation des inconvénients cités, on s'est intéressé à la réalisation d'un ensemble comprenant :
- un brûleur qui sera celui du type présenté ci-avant et/ou qui fonctionnera suivant le procédé de combustion (réaction) également présenté ci-avant, ce brûleur ayant en outre un axe central, et un premier plan contenant cet axe, et
- un four à réaction, sensiblement cylindrique, communiquant avec le brûleur ci-dessus, présentant une paroi périphérique et ayant lui-même un axe central ainsi qu'un second plan contenant une section droite du cylindre et qui est orienté pour intersecter le premier plan suivant une droite,
- avec ici pour particularité conseillée que ladite droite (typiquement l'axe central du brûleur) intersectera un rayon du four plus près de la paroi périphérique que de l'axe central du four, de sorte à assurer une disposition sensiblement tangentielle.

En alternative, lesdits axes centraux du brûleur et du four sont sensiblement confondus.

Dans les deux cas, les turbulences et les mélanges organisés et échelonnés de flux gazeux seront favorisés dans le four, les pressions pouvant être adaptées en conséquence.

Une description détaillée d'un mode de réalisation va maintenant être présentée, à titre d'exemple privilégié mais non limitatif, en référence à des dessins où :
- la figure 1 est un schéma assez précis d'un mode privilégié de réalisation d'un brûleur reprenant nombre des caractéristiques ci-avant citées,
- la figure 2 est un agrandissement d'un détail montrant une disposition pertinente de plusieurs des orifices de sortie d'un des tubes d'apport de gaz d'appoint,
- la figure 3 schématise un brûleur proche du précédent monté sur un four de destruction du gaz acide considéré,
- la figure 4 est une coupe selon IV-IV de la figure 3,
- la figure 5 est une vue selon V de la figure 2
- la figure 6 est une coupe selon VI de la figure 5, et
- la figure 7 est une alternative à la solution de la figure 6, dans une disposition axiale du brûleur.

L'hydrogène sulfuré H₂S au traitement ou à la destruction duquel la présentation ci-après se réfère, à titre d'exemple, est un gaz toxique qui se trouve dans la nature mélangé au gaz naturel et aux gaz de géothermie.

Il est par ailleurs produit en abondance par hydrodésulfuration catalytique des produits pétroliers, dans les gaz de cokerie, les produits de pyrolyse des pneus, les rejets de l'industrie du papier, la métallurgie, la fermentation des déchets (biogaz).

Les brûleurs d'unité de désulfuration (unité Claus ou « sulfur recovery unit (unité de récupération de soufre)», SRU, unité de récupération de soufre) brûlent du gaz acide (mélange de H₂S et de CO₂) typiquement issu des procédés de désulfuration du pétrole, du gaz ou de l'acier. Cette combustion est réalisée en sous-stoechiométrie pour donner de l'H₂0, du SO₂ et de l'H₂S résiduel qui réagiront suivant la réaction Claus ((2) ci-après) pour donner de l'eau et du soufre. Le soufre peut être récupéré en divers points de cette unité sous forme liquide après condensation.

Les réactions principales générées par ce brûleur dans l'ouvreau sont :
Combustion de 1/3 de l'H₂S:
   (1) H₂S + 3/2 O₂ -> SO₂ + H₂O. Le SO₂ ainsi formé réagit avec l'H₂S restant pour donner du soufre et de l'H₂0, c'est la Réaction Claus :
   (2) SO₂ + 2H2S ⇆ 3S + H₂O

Ce brûleur fonctionne donc, par principe, en très forte sous- stoechiométrie. Le CO₂, lui, n'intervient pas directement dans la combustion, mais agit comme un diluant. Plus le pourcentage de CO₂ dans le gaz acide est élevé (et donc par conséquent le pourcentage de H₂S est faible), plus la température dans la chambre de combustion/réaction sera faible et moins la réaction (2) sera complète.

Comme connu, le « cofiring » (combustion combinée) est la combustion sensiblement concomitante du gaz acide et du gaz combustible d'appoint.

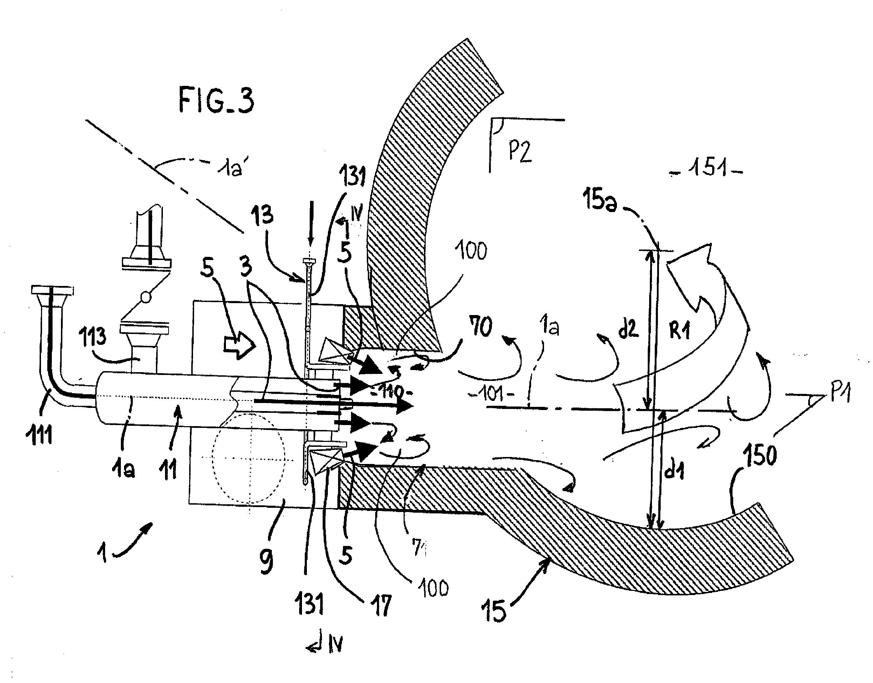

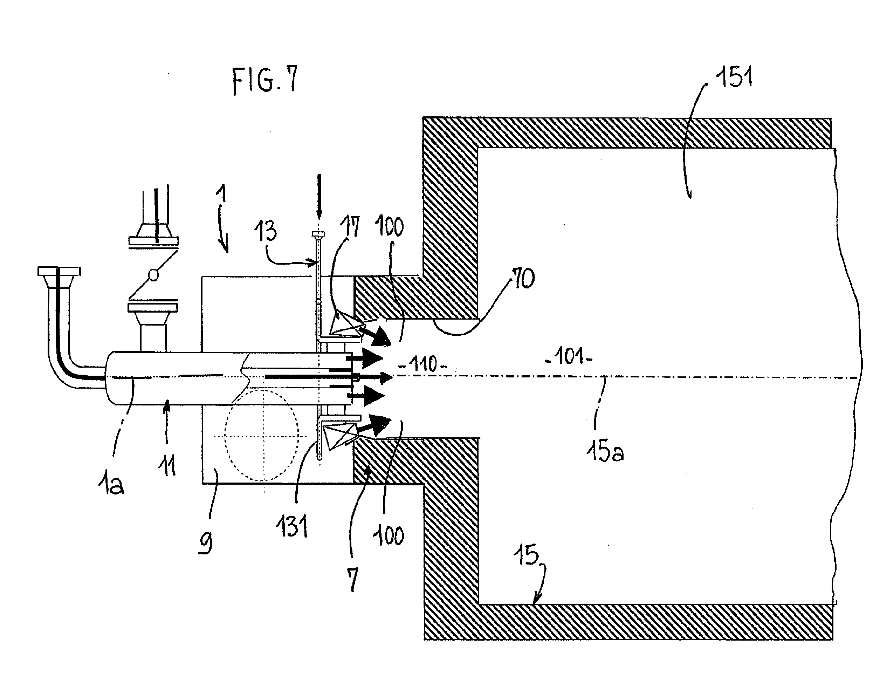

La combustion de gaz acide en forte sous-stoechiométrie génère des températures dans le four à réaction 15 (figs.3,7) qui varient de 700°C à 1400°C en fonction de la teneur en gaz acide.

Un but de la combustion combinée est d'augmenter la température dans le four à réaction en réalisant, en sus de la combustion en forte sous-stoechiométrie du gaz acide, la combustion quasi complète du gaz combustible d'appoint et améliorer ainsi la stabilité de la combustion et/ou la cinétique de la réaction Claus (2, si H₂S) et/ou assurer une meilleure destruction de polluants spécifiques contenus dans le gaz acide tels que Benzène, Toluène, Xylène (communément appelés BTX) dont la destruction est plus efficace à température élevée.

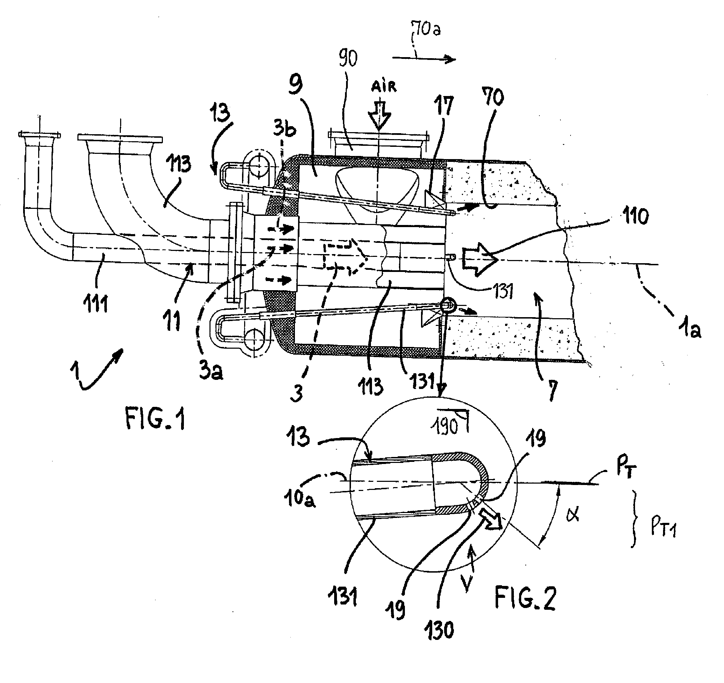

Figures 1, 2 on voit donc un brûleur 1 pour le traitement d'hydrogène sulfuré H₂S.

Il est prévu que ce brûleur fonctionne de préférence avec un dosage sous-stoechiométrique entre la quantité en volume apporté d'H2S contenu dans le gaz acide (H2S et dioxyde de carbone CO2, dans l'exemple) et celle d'oxygène dans le flux d'air comburant 5.

Le rapport entre le flux global de H₂S dans le gaz acide et le flux d'oxygène contenu d'air comburant peut être de 20% à 60% en volume, pour la conversion de l'H₂S.

Le brûleur 1 présente un axe central 1a.

Il comprend par ailleurs un ouvreau 7, où s'enflamment les composants gazeux apportés.

Communiquant avec cet ouvreau, on trouve:
- une enceinte amont 9 au sein de laquelle est apporté de l'air comburant sous pression, et qui est donc raccordée à une source convenable,
- au moins un conduit 11 d'apport global du gaz acide combustible à traiter,
- des moyens 13 d'apport de gaz combustible d'appoint.

L'ouvreau 7 est limité périphériquement par une paroi 70. On conseille l'emploi de matériau réfractaire. Cet ouvreau peut être de forme sensiblement cylindrique, conique ou de révolution quelconque. L'enceinte 9 et l'ouvreau 7 sont coaxiaux. L'ouvreau débouche sur le four à réaction 15 (voir figs.3,7).

Le conduit 11 traverse l'enceinte 9 et débouche sur l'ouvreau 7 de façon sensiblement centrale, pour y délivrer le flux 110 de gaz acide sensiblement ou principalement axialement. On entend par là un éventuel écart angulaire en sortie de conduit d'au plus 10° par rapport à l'axe 1a, ou une parallèle à lui.

Les moyens d'apport 13 traversent également l'enceinte 9 et débouchent eux aussi sur l'ouvreau.

Ces moyens 13 d'apport du gaz combustible d'appoint comprennent des tubes 131 d'apport de ce gaz disposés à l'écart, autour, du conduit 11 d'apport global de gaz acide à traiter. Ces tubes 131 débouchent ainsi sur l'ouvreau de telle manière qu'un flux 130 de gaz combustible d'appoint soit délivré autour du flux global 110 de gaz acide.

Favorablement, pour une bonne répartition du flux 130, les tubes 131 d'apport de gaz combustible d'appoint seront au nombre d'au moins trois, et de préférence quatre ou plus, chacun de section inférieure à celle du conduit 11 d'apport global de gaz acide à traiter, ou de chaque conduit le constituant.

Une répartition angulaire équilibrée est conseillée.

Comme illustré, les tubes 131 s'avancent dans l'enceinte 9 en direction de l'ouvreau 7.

Concernant la constitution du conduit global 11, le mode de réalisation préféré illustré comprend un premier conduit 111 central dans lequel du gaz acide à traiter peut circuler et un second conduit périphérique 113 à l'intérieur duquel passe le premier conduit 111 et dans lequel du gaz acide à traiter peut également circuler.

Ici, les deux conduits sont coaxiaux (axe central 1a) au moins à proximité de l'ouvreau 7 et concentriques.

Ceci est favorable à la réalisation d'un brûleur de type "tuyère double impulsion" comprenant ces deux conduits imbriqués 111, 113 alimentés en gaz acide à traiter, généralement à vitesses d'éjection ou pressions différentes.

Et cette disposition a notamment pour avantage de créer de la turbulence grâce à la différence de vitesse des deux flux gazeux apportés, respectivement 3a, 3b, réalisant des remous favorables à un d'accrochage de flamme et à la combustion.

Dans la réalisation à double conduits 111, 113, une telle disposition facilite en outre la cinétique de la réaction recherchée dans le four Claus, à savoir environ 1/3 de combustion et 2/3 de réaction chimique.

Appliqué, comme figures 3,7, à un four 15 où se développe un procédé Claus, une telle disposition originale facilite en outre la cinétique de la, ou des, réaction(s) recherchée(s) à la fois dans le brûleur 1 et dans le four 15.

Concernant ces différences de pressions et vitesses, on recommande que, dans le second conduit périphérique 113 circule du gaz à une vitesse comprise entre 70 m/s et 200 m/s et que dans le premier conduit 111 circule du gaz à une vitesse comprise entre 20 m/s et à 100m/s.

Autour de ces conduits, suivant un rayon de l'enceinte ou de l'ouvreau, on conseille que les tubes 131 d'apport du gaz combustible d'appoint s'étendent localement (typiquement en limite entre l'enceinte 9 et l'ouvreau 7) entre des ailettes périphériques 17 de mise en mouvement tourbillonnaire du flux d'air comburant et le conduit 11 global d'apport de gaz acide combustible à traiter (en l'espèce le second conduit périphérique 113).

En d'autres termes, on préfèrera que ces tubes 131 s'étendent, en direction de l'ouvreau 7, au moins jusqu'au niveau desdites ailettes périphériques 17.

Ainsi l'efficacité des flux d'air et de gaz combustible d'appoint sera optimisée. On aura compris que ces ailettes seront fixes.

En liaison avec ce point, on recommande que les extrémités libres, de sortie de gaz, des conduits et tubes précités soient situés longitudinalement (axe 1a) sensiblement dans le même plan, pour éviter les surchauffes et perturbations de réactions.

Les ailettes périphériques 17 formeront de préférence un anneau centré sur l'axe 1a. Avantageusement, elles seront disposées en limite entre l'enceinte 9 et l'ouvreau 7, sensiblement dans le plan de l'extrémité du conduit global 11.

Notamment dans l'application du traitement ou destruction d'hydrogène sulfuré H₂S, on recommande donc que l'injection du gaz combustible d'appoint soit (radialement) dissociée de l'injection de gaz acide. Contrairement au gaz acide qui est injecté au (vers le) centre du brûleur avec une forte composante axiale (1a), le gaz combustible d'appoint est injecté séparément plus en périphérie du brûleur par les tubes précités d'injection majoritairement dirigée vers l'ouvreau réfractaire (paroi 70).

On aura compris que les tubes 131 créent, dans le flux annulaire d'air comburant, une série de flux plutôt localisés d'apport du gaz combustible d'appoint autour du flux central de gaz acide à traiter. Cette disposition permet une combustion plutôt rapide du gaz combustible d'appoint par l'air de combustion, le long de l'ouvreau 7, créant ainsi une réaction avec combustion étagée dans les chambres 7, 15 _{:}
- première zone (100 fig.3): combustion cherchant à être complète du gaz combustible d'appoint, en excès d'air,
- seconde zone (101-110 fig.3): combustion sous-stoechiométrique du gaz acide.

A cette fin et/ou, de façon générale, pour favoriser une combustion combinée, il est conseillé que chaque tube 131 d'apport du gaz combustible d'appoint soit traversé, près de son extrémité libre, par des orifices 19 de sortie de ce gaz. Ces orifices 19 sont disposés pour que le gaz combustible d'appoint sorte au moins majoritairement en direction de la paroi périphérique 70 (voir figures 1, 2 ensemble).

A ce sujet, figure 2, ces orifices 19 de sortie du gaz combustible d'appoint sont orientés de manière que les flux de ce gaz soient délivrés au moins majoritairement à l'écart de la zone plus centrale du flux global 110 de gaz acide (fig.3).

Ainsi, on recommande que ces orifices 19 soient orientés au moins majoritairement de biais par rapport à une parallèle à l'axe central 1a, en direction de ladite paroi périphérique 70 et vers l'aval en référence au sens 70a de circulation des flux de gaz qui sont apportés (fig.1) .

Une autre manière de procéder est que ces orifices 19 soient, par tube, au nombre d'au moins deux, chacun orienté transversalement, sensiblement radialement ou de biais par rapport à l'axe du tube qu'il traverse.

Cette disposition assure la combustion rapide et cherchant à être complète du gaz combustible d'appoint avant la consommation de l'oxygène de l'air par le gaz acide (tel H₂S), dont la vitesse d'inflammation est plus élevée que celle du gaz combustible d'appoint. Elle évite ainsi la production supplémentaire :
- de suies qui viennent polluer le soufre et les catalyseurs en aval du four à réaction,
- de COS et CS₂ qui diminue le rendement de la chaîne à soufre (dans le cas du traitement d'H₂S).
- une grande stabilité de la flamme H₂S par un ouvreau chaud, et cela même lorsque la teneur en H₂S est très faible.

Figures 2,5,6 les deux caractéristiques ci-avant sont cumulées.

En termes de valeurs, on recommande des angles respectivement α, β tels que :
0 < α ≤ 90°, de préférence 30° < α ≤ 90°.
0 < β ≤ 90°, de part et d'autre du plan médian 190 ; figs.2,5,6.

Sur la base de tout ou partie des informations ci-dessus, en particulier en apportant vers l'ouvreau 7 le flux d'air comburant autour du flux de gaz acide à traiter et le(s) flux(s) de gaz combustible d'appoint autour du flux de gaz acide à traiter, il va donc être possible de traiter un gaz acide combustible et permettre une combustion combinée, avec si nécessaire un dosage sous-stoechiométrique entre les flux précités au sein du gaz acide et de l'air apportés vers ledit ouvreau 7.

En outre, pour réaliser un brûleur performant tout en permettant ainsi un tel traitement de gaz acide combustible, avec combustion combinée, on va pouvoir, à nouveau sur la base des informations ci-avant :
- apporter du gaz acide à traiter vers l'ouvreau 7,
- apporter vers lui également le gaz combustible d'appoint,
- en apportant ce gaz combustible d'appoint par les tubes 131 qui traversent donc l'enceinte 9, à l'écart du(des) conduit(s) 11, 111, 113 d'apport du gaz acide.

Ceci s'appliquera d'autant plus si on met en oeuvre le procédé Claus de destruction d'hydrogène sulfuré.

En particulier dans ce cas et/ou de réaction(s) de transformation initié à partir de gaz acide à traiter comprenant (au moins) entre 20% et 100% en volume de H₂S et entre 0% et 80% en volume de CO₂, on conseille par ailleurs que le gaz combustible d'appoint soit ou contienne majoritairement l'un au moins des gaz suivants : gaz naturel, gaz de raffinerie (fuel gaz), butane, propane.

Concernant encore ce gaz le gaz combustible d'appoint, on recommande encore ce qui suit :
- on le fera sortir des tubes au moins majoritairement en direction de la paroi périphérique 70 (combustion étagée),
- on l'apportera, dans chaque tube d'apport 131, avec un débit égal à moins de 2% du débit total de gaz acide apporté dans le conduit global 11,
- et/ou, on l'apportera dans l'ensemble desdits tubes 131 avec un débit total égal à moins de 7% du débit total de gaz acide apporté.

Combiner ces caractéristiques favorisera la performance des réactions, en particulier dans le cadre du procédé Claus de destruction d'hydrogène sulfuré, en éloignant les différentes zones d'apport de gaz en entrée de l'ouvreau 7.

Ceci est d'autant plus vérifié si on utilise les deux conduits 111, 113, en faisant circuler dans le second conduit périphérique 113 le gaz acide à une pression ou une vitesse d'éjection plus faible que dans le premier conduit central 111.

Encore au sujet de ce qui précède, concernant le dosage sous-stoechiométrique entre les flux de H₂S contenu dans le gaz acide et d'oxygène contenu d'air comburant apportés, on recommande une proportion de 20% à 60%.

Figure 3 notamment, on voit un montage privilégié du brûleur 1 sur un four de réaction 15, à paroi périphérique 150 et avec lequel l'ouvreau 7 communique, créant ainsi un ensemble réactionnel. Les réactions débutent dans l'ouvreau. Elles se poursuivent dans la chambre de réaction(s) 151 du four où débouche l'ouvreau 7.

Le four 15 est sensiblement cylindrique avec un axe central longitudinal 15a s'étendant suivant la longueur du cylindre. Il présente une paroi périphérique 150.

Dans ce four, on peut en particulier prévoir que la/les réactions et combustions développées ou initiées dans l'ouvreau 7 vont se réaliser, d'autres pouvant intervenir en fonction des conditions crées.

Comme illustré, considérons que :
- le brûleur présente un premier plan P1 (figure 3) contenant l'axe central 1a,
- le four lui-même présente l'axe central 15a ainsi qu'un second plan P2 contenant une section droite du cylindre (perpendiculaire à l'axe central 15a).

On conseille que :
- le second plan P2 soit orienté pour intersecter le premier plan P1 suivant une droite, ici l'axe 1a,
- et que cette droite d'intersection intersecte un rayon R1 du four (passant donc par l'axe 15a) plus près de la paroi périphérique 150 que dudit axe central 15a (d1 < d2).

Ainsi, comme schématisé, on pourra assurer une disposition sensiblement tangentielle du brûleur par rapport au four.

On aura compris que ladite droite d'intersection sera l'axe 1a uniquement si les axes 1a et 15a sont perpendiculaires. R1 est en outre ici perpendiculaire à l'axe 1a.

Ici le montage peut être en outre sensiblement perpendiculaire entre les axes 1a et 15a. Toutefois, une orientation plus tangentielle, selon 1a' par exemple, est possible.

Figures 2,4,5, on remarque encore que les orifices 19 de sortie de gaz d'appoint qui traversent les tubes d'apport 131 sont majoritairement (ici en totalité) situés d'un même côté d'un plan, tel PT, passant par la parallèle, telle 10a, à l'axe central 1a du brûleur.

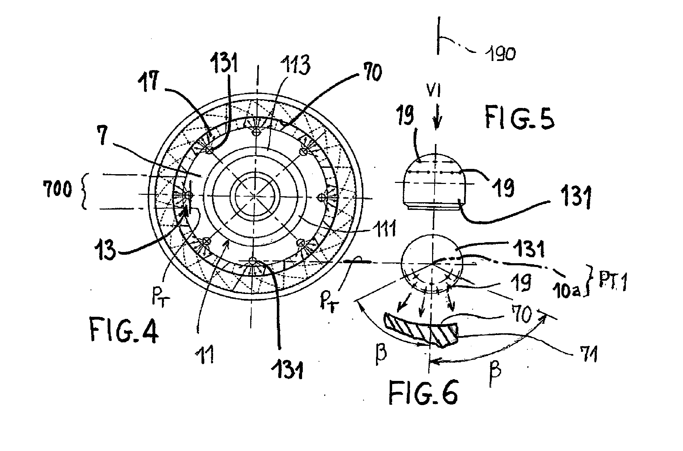

En pratique, ces orifices seront ainsi situés au moins majoritairement du côté du demi-plan, tel PT1 (figures 2, 6), faisant face à la paroi 70 de façon à diriger chaque flux de gaz d'appoint au moins essentiellement vers cette paroi. On notera que le plan PT n'intersectera pas la paroi 70 dans le secteur 700 de cette paroi vers lequel les orifices 19 du tube 131 concerné sont au moins essentiellement dirigés (figure 4).

Figure 3, la grande flèche dans le four 15 indique le tourbillon général créé. Les autres flèches schématisent les directions des flux des gaz en cause, en particulier ceux sortant des différents canaux d'apports (air, gaz acide...). Figure 1, les flèches en sortie des tubes 131 haut et bas montrent les directions respectivement globalement suivies par les flux de gaz en cause.

Concernant les conditions de service, on peut prévoir ce qui suit :
Air comburant : comburant composé d'air essentiellement enrichi avec de l'oxygène et dont la teneur en oxygène volume varie de 15% à 50%.
   Pression en entrée 90 du brûleur : 20 à 500 X 10²Pa (mbar),
   Pression dans l'ouvreau 7 : 0 à 480 X 10²Pa (mbar),
   Variation de la pressions dans le brûleur : de 0 à 40 X 10²Pa (mbar).
   Température de cet air : varie de l'ambiante (25°C à 105 Pa) à 300°C dans l'ouvreau 7.
Gaz acide
   Pression d'entrée gaz acide : pression dans la chambre 7 + 20 à 300 X 10²Pa (mbar),
   Température de ce gaz acide : varie de l'ambiante à 300°C,
Gaz d'appoint :
   Pression 100 à 2 000 X 10²Pa (mbar), température du gaz d'appoint : généralement sensiblement l'ambiante. Le gaz d'appoint est un gaz combustible, le plus souvent du gaz naturel ou un gaz combustible issu des procédés de l'usine (gaz de raffinerie, gaz de cokerie, gaz de pétrole liquéfié...) et peut être également un gaz résiduaire dont on veut assurer la combustion complète à haute température tel que mercaptans, gaz ammoniaqués...

Dans la variante figure 7, le brûleur, son ouvreau 7, le four de réaction 15 et sa chambre de réaction 151 sont coaxiaux (axes confondus 1a/15a).

Comme on le voit sur la figure, on retrouve là, avec une telle orientation générale, les éléments précités, en particulier du brûleur 1.

## Revendications

1. Brûleur (1) pour le traitement d'au moins un gaz acide combustible, ce brûleur (1) présentant un axe central (1a) et comprenant :
- un ouvreau (7) limité périphériquement par une paroi (70,150) et, communiquant avec lui :
- une enceinte (9) au sein de laquelle est apporté de l'air comburant sous pression,
- au moins un conduit (11,111,113) d'apport de gaz acide combustible à traiter, traversant ladite enceinte (9) et débouchant sur l'ouvreau (7), de façon sensiblement centrale, pour y délivrer un flux (110) de gaz acide sensiblement ou principalement axialement, et,
- des moyens d'apport (13) d'au moins un gaz combustible d'appoint, traversant ladite enceinte (9) et débouchant sur l'ouvreau (7), lesdits moyens d'apport (13) comprenant des tubes (131) d'apport de ce gaz disposés autour du(des) conduit(s) (11,111,113) d'apport du gaz acide à traiter et débouchant ainsi sur l'ouvreau (7), afin d'y délivrer un flux de gaz combustible d'appoint autour du flux (110) de gaz acide,
**caractérisé en ce que** les tubes d'apport (131) du gaz combustible d'appoint sont traversés par des orifices (19) de sortie de ce gaz qui sont disposés pour que le gaz combustible d'appoint sorte au moins majoritairement en direction de la paroi périphérique (70,150).

2. Brûleur (1) selon la revendication 1, **caractérisé en ce que** ledit au moins un conduit d'apport (11,111,113) du gaz acide à traiter comprend :
- un premier conduit central (111) dans lequel du gaz acide à traiter peut circuler,
- un second conduit périphérique (113) à l'intérieur duquel passe ledit premier conduit central (111) et dans lequel du gaz acide à traiter peut circuler.

3. Brûleur (1) selon la revendication 1 ou 2, **caractérisé en ce que** les orifices (19) de sortie du gaz combustible d'appoint :
- sont orientés au moins pour certains de biais par rapport à une parallèle à l'axe central (1a), en direction de ladite paroi périphérique (70) et vers l'aval par rapport au sens de circulation des flux de gaz qui sont apportés, et/ou
- sont au nombre d'au moins deux par tube ( 131) d'apport, chacun orienté sensiblement radialement au conduit (11,111,113) qu'il traverse.

4. Procédé de traitement d'un gaz acide combustible à traiter et permettant une combustion combinée, en présence d'au moins un gaz combustible d'appoint et d'air comburant, avec un dosage sous-stoechiométrique entre la quantité en volume d'H₂S contenu dans le gaz acide et celle d'O₂ dans l'air apportés vers un ouvreau (7) d'un brûleur (1), dans lequel ouvreau (7) on apporte le flux d'air comburant et le flux de gaz combustible d'appoint autour du flux de gaz acide à traiter, **caractérisé en ce qu'**on fait sortir le gaz combustible d'appoint au moins majoritairement en direction de la paroi périphérique (70,150) de l'ouvreau (7).

5. Procédé selon la revendication 4, **caractérisé en ce que**:
- on apporte le gaz acide à traiter à travers au moins un conduit d'apport (11,111,113) de ce gaz traversant une enceinte (9) au sein de laquelle est apporté de l'air comburant et débouchant sur l'ouvreau (7),
- on apporte vers l'ouvreau (7) le gaz combustible d'appoint, apporté par des tubes d'apport (131) traversant ladite enceinte (9), à l'écart du(des) conduit(s) d'apport (11, 111,/113) de gaz acide à traiter,
- l'air comburant issu de ladite enceinte (9) débouche sur l'ouvreau (7) autour du(des) conduit(s) d'apport (11, 111,113) de gaz acide à traiter, avec ledit dosage sous-stoechiométrique entre la quantité en volume d'H₂S contenu dans le gaz acide et celle d'O₂ dans l'air apporté.

6. Procédé selon la revendications 4 ou 5, **caractérisé en ce qu'**on apporte le gaz acide à traiter dans un premier conduit central (111) et dans un second conduit périphérique (113) à l'intérieur duquel passe ledit premier conduit central (111) et dans lequel du gaz acide à traiter circule à une pression ou une vitesse d'éjection plus faible que dans le premier conduit central (111).

7. Procédé selon l'une au moins des revendications 4,5 ou 6, **caractérisé en ce que** :
- on apporte le gaz combustible d'appoint avec un débit dans chaque tube (131) d'apport de ce gaz égal à moins de 2% du débit total de gaz acide apporté, et/ou
- on apporte le gaz combustible d'appoint avec un débit total dans l'ensemble des tubes (131) d'apport de ce gaz égal à moins de 7% du débit total de gaz acide apporté.

8. Procédé selon l'une au moins des revendications 4,5,6 ou 7, **caractérisé en ce qu'**on apporte comme flux (110, 130) de gaz acide à traiter au moins un flux de gaz comprenant du H₂S, entre 20% et 100% en volume, du CO₂, entre 0 et 80% en volume, et entre 0 et 5% d'au moins un autre gaz qui n'est ni de l'air comburant, ni le gaz combustible d'appoint.

9. Procédé selon l'une au moins des revendications 4,5,6 ou 7, **caractérisé en ce qu'**on apporte dans lesdits tubes (131) d'apport au moins un gaz complémentaire, non mélangé au gaz acide et qui n'est ni de l'air comburant, ni le gaz combustible d'appoint.

10. Ensemble comprenant un brûleur (1) ayant un axe central (1a) et un premier plan (P1) contenant cet axe, le brûleur (1) communiquant avec un four (15) sensiblement cylindrique présentant une paroi périphérique (150) et ayant lui-même un axe central (15a) ainsi qu'un second plan (P2) contenant une section droite du cylindre et qui est orienté pour intersecter le premier plan (P1) suivant une droite, **caractérisé en ce que** le brûleur (1) est celui selon l'une des revendications 1 à 3, et ladite droite intersecte un rayon du four plus près de la paroi périphérique (150) que de l'axe central (15a) du four (15), de sorte à assurer une disposition sensiblement tangentielle.

11. Ensemble comprenant un brûleur (1) ayant un axe central (1a) et communiquant avec un four (15) sensiblement cylindrique présentant une paroi périphérique (150) et ayant lui-même un axe central (15a), **caractérisé en ce que** le brûleur (1) est celui selon l'une au moins des revendications 1 à 3, et lesdits axes centraux (1a, 15a) du brûleur et du four (15) sont sensiblement confondus.

## Patentansprüche

1. Brenner (1) zur Behandlung mindestens eines verbrennbaren sauren Gases, wobei dieser Brenner (1) eine zentrale Achse (1a) aufweist und Folgendes umfasst:
- eine Kehle (7), deren Umfang von einer Wand (70, 150) begrenzt wird und mit der Folgendes in Verbindung steht:
- eine Kammer (9), in die unter Druck stehende Verbrennungsluft zugeführt wird,
- mindestens eine Leitung (11, 111, 113) zum Zuführen von zu behandelndem verbrennbarem saurem Gas, wobei die Leitung im Wesentlichen zentral durch die Kammer (9) verläuft und an der Kehle (7) mündet, um an diese einen Strom (110) von saurem Gas im Wesentlichen oder vor allem axial abzugeben, und
- Zuführmittel (13) für mindestens ein zusätzliches verbrennbares Gas, die durch die Kammer (9) verlaufen und an der Kehle (7) münden, wobei die Zuführmittel (13) Rohre (131) zum Zuführen dieses Gases umfassen, die um die Leitung bzw. Leitungen (11, 111, 113) zum Zuführen des zu behandelnden sauren Gases herum angeordnet sind und folglich an der Kehle (7) münden, um an diese einen Strom von zusätzlichem verbrennbarem Gas um den Strom (110) von saurem Gas herum abzugeben,
**dadurch gekennzeichnet, dass** die Zuführrohre (131) für das zusätzliche verbrennbare Gas von Öffnungen (19) zum Austritt dieses Gases durchdrungen werden, die so angeordnet sind, dass das zusätzliche verbrennbare Gas mindestens vorwiegend in der Richtung der Umfangswand (70, 150) austritt.

2. Brenner (1) nach Anspruch 1, **dadurch gekennzeichnet, dass** die mindestens eine Zuführleitung (11, 111, 113) für das zu behandelnde saure Gas Folgendes umfasst:
- eine erste, zentrale Leitung (111), in der das zu behandelnde saure Gas zirkulieren kann,
- eine zweite Umfangsleitung (113), durch deren Inneres die erste, zentrale Leitung (111) hindurchtritt und in der das zu behandelnde saure Gas zirkulieren kann.

3. Brenner (1) nach Anspruch 1 oder 2, **dadurch gekennzeichnet, dass** die Öffnungen (19) zum Austritt des zusätzlichen verbrennbaren Gases:
- mindestens für bestimmte Winkel in Bezug auf eine Parallele zur zentralen Achse (1a) in der Richtung der Umfangswand (70) und nach unten in Bezug auf die Zirkulationsrichtung von Gasströmen, die zugeführt werden, ausgerichtet sind und/oder
- in der Anzahl von mindestens zwei pro Zuführrohr (131) vorliegen, wobei jede im Wesentlichen radial zu der Leitung (11, 111, 113), durch die sie verläuft, ausgerichtet ist.

4. Verfahren zur Behandlung eines zu behandelnden verbrennbaren sauren Gases, das eine kombinierte Verbrennung zulässt, in Gegenwart mindestens eines zusätzlichen verbrennbaren Gases und Verbrennungsluft mit einer substöchiometrischen Dosierung zwischen der Volumenmenge von H₂S, das in dem sauren Gas enthalten ist, und der von O₂ in der Luft, die zu einer Kehle (7) eines Brenners (1) zugeführt werden, wobei der Strom von Verbrennungsluft und der Strom von zusätzlichem verbrennbarem Gas um den Strom von zu behandelndem saurem Gas herum in die Kehle (7) zugeführt werden, **dadurch gekennzeichnet, dass** das zusätzliche verbrennbare Gas mindestens überwiegend in der Richtung der Umfangswand (70, 150) der Kehle (7) austreten gelassen wird.

5. Verfahren nach Anspruch 4, **dadurch gekennzeichnet, dass**:
- das zu behandelnde saure Gas durch mindestens eine Zuführleitung (11, 111, 113) für dieses Gas zugeführt wird, die durch eine Kammer (9) verläuft, in die die Verbrennungsluft zugeführt wird und die an der Kehle (7) mündet,
- das zusätzliche verbrennbare Gas zur Kehle (7) zugeführt wird, wobei es durch Zuführrohre (131), die durch die Kammer (9) verlaufen, entfernt von der Zuführleitung bzw. den Zuführleitungen (11, 111, 113) für zu behandelndes saures Gas zugeführt wird,
- die Verbrennungsluft von der Kammer (9), die an der Kehle (7) mündet, um die Zuführleitung bzw. Zuführleitungen (11, 111, 113) für zu behandelndes saures Gas herum mit der substöchiometrischen Dosierung zwischen der Volumenmenge von H₂S, das in dem sauren Gas enthalten ist, und der von O₂ in der zugeführten Luft ausgegeben wird.

6. Verfahren nach den Ansprüchen 4 oder 5, **dadurch gekennzeichnet, dass** das zu behandelnde saure Gas in einer ersten, zentralen Leitung (111) und in einer zweiten Umfangsleitung (113), durch deren Inneres die erste, zentrale Leitung (111) hindurchtritt und in der das zu behandelnde saure Gas mit einem Druck oder einer Ausstoßgeschwindigkeit zirkulieren kann, der bzw. die geringer als in der ersten, zentralen Leitung (111) ist, zugeführt wird.

7. Verfahren nach mindestens einem der Ansprüche 4, 5 oder 6, **dadurch gekennzeichnet, dass**:
- das zusätzliche verbrennbare Gas mit einem Durchsatz in jedem Rohr (131) zum Zuführen dieses Gases zugeführt wird, der mindestens 2 % des Gesamtdurchsatzes von zugeführtem saurem Gas entspricht, und/oder
- das zusätzliche verbrennbare Gas mit einem Gesamtdurchsatz in der Menge von Rohren (131) zum Zuführen dieses Gases zugeführt wird, der mindestens 7 % des Gesamtdurchsatzes von zugeführtem saurem Gas entspricht.

8. Verfahren nach mindestens einem der Ansprüche 4, 5, 6 oder 7, **dadurch gekennzeichnet, dass** als Strom (110, 130) von zu behandelndem saurem Gas mindestens ein Gasstrom zugeführt wird, der zwischen 20 Vol.-% und 100 Vol.-% H₂S, zwischen 0 und 80 Vol.-% CO₂ und zwischen 0 und 5 % mindestens eines anderen Gases umfasst, bei dem es sich weder um die Verbrennungsluft noch um das zusätzliche verbrennbare Gas handelt.

9. Verfahren nach mindestens einem der Ansprüche 4, 5, 6 oder 7, **dadurch gekennzeichnet, dass** in den Rohren (131) zum Zuführen mindestens ein komplementäres Gas zugeführt wird, das nicht mit dem sauren Gas gemischt ist und bei dem es sich weder um die Verbrennungsluft noch um das zusätzliche verbrennbare Gas handelt.

10. Einheit, die einen Brenner (1) umfasst, der eine zentrale Achse (1a) und eine erste Ebene (P1) hat, die diese Achse enthält, wobei der Brenner (1) mit einem im Wesentlichen zylindrischen Ofen (15) in Verbindung steht, der eine Umfangswand (150) aufweist und selbst eine zentrale Achse (15a) sowie eine zweite Ebene (P2) hat, die einen geraden Abschnitt des Zylinders enthält und die so ausgerichtet ist, dass sie sich mit der ersten Ebene (P1) gemäß einer Geraden schneidet, **dadurch gekennzeichnet, dass** der Brenner (1) der Brenner nach einem der Ansprüche 1 bis 3 ist und die Gerade sich mit einem Radius des Ofens näher der Umfangswand (150) als der zentralen Achse (15a) des Ofens (15) schneidet, so dass eine im Wesentlichen tangentiale Anordnung sichergestellt wird.

11. Einheit, die einen Brenner (1) umfasst, der eine zentrale Achse (1a) hat und mit einem im Wesentlichen zylindrischen Ofen (15) in Verbindung steht, der eine Umfangswand (150) aufweist und selbst eine zentrale Achse (15a) hat, **dadurch gekennzeichnet, dass** der Brenner (1) der Brenner nach mindestens einem der Ansprüche 1 bis 3 ist und die zentralen Achsen (1a, 15a) des Brenners und des Ofens (15) im Wesentlichen zusammenfallen.

## Claims

1. Burner (1) for the treatment of at least one combustible acid gas, this burner (1) having a central axis (1a) and comprising:
- a port (7) bounded peripherally by a wall (70, 150) and, communicating with this port:
- a chamber (9) to which oxidizing air under pressure is supplied,
- at least one pipe (11, 111, 113) for supplying combustible acid gas to be treated, passing through the said chamber (9) and opening onto the port (7), substantially centrally, where it delivers a stream (110) of acid gas substantially or mainly axially, and,
- supply means (13) for supplying at least one top-up combustible gas, passing through the said chamber (9) and opening onto the port (7), the said supply means (13) comprising tubes (131) for supplying this gas which are arranged around the pipe(s) (11, 111, 113) supplying the acid gas to be treated and thus opening onto the port (7) where they can deliver a stream of top-up combustible gas around the stream (110) of acid gas,
**characterized in that** the supply tubes (131) for supplying the top-up combustible gas have outlet orifices (19) for this gas passing through them, these orifices being arranged in such a way that the top-up combustible gas exits at least predominantly towards the peripheral wall (70, 150).

2. Burner (1) according to Claim 1, **characterized in that** the said at least one supply pipe (11, 111, 113) supplying the acid gas that is to be treated comprises:
- a central first pipe (111) along which the acid gas to be treated can flow,
- a peripheral second pipe (113) along the inside of which the said central first pipe (111) runs and through which the acid gas that is to be treated can circulate.

3. Burner (1) according to Claim 1 or 2, **characterized in that** the outlet orifices (19) for the top-up combustible gas:
- are oriented, at least in the case of some of them, at an angle with respect to a parallel to the central axis (1a), towards the said peripheral wall (70) and in the downstream direction in relation to the direction in which the streams of supplied gases flow, and/or
- number at least two per supply tube (131), each one oriented substantially radially with respect to the pipe (11, 111, 113) through which it passes.

4. Method for treating a combustible acid gas to be treated and that allows combined combustion, in the presence of at least one top-up combustible gas and of oxidizing air, with sub-stoichiometric metering between the quantity by volume of H₂S contained in the acid gas and that of O₂ in the air, these being supplied to a port (7) of a burner (1) in which port (7) the stream of oxidizing air and the stream of top-up combustible gas are supplied around the stream of acid gas that is to be treated, **characterized in that** the top-up combustible gas is made to exit at least predominantly in the direction of the peripheral wall (70, 150) of the port (7).

5. Method according to Claim 4, **characterized in that**:
- the acid gas be treated is supplied through at least one supply pipe (11, 111, 113) for this gas that passes through a chamber (9) to which the oxidizing air is supplied and which opens onto the port (7),
- the top-up combustible gas supplied by the supply tubes (131) passing through the said chamber (9) is supplied to the port (7), away from the supply pipe(s) (11, 111, 113) for the acid gas to be treated,
- the oxidizing air from the said chamber (9) opens onto the port (7) around the supply pipe(s) (11, 111, 113) for the acid gas to be treated, with the said sub-stoichiometric metering between the quantity by volume of H₂S contained in the acid gas and that of O₂ in the supplied air.

6. Method according to Claim 4 or 5, **characterized in that** the acid gas to be treated is supplied in a central first pipe (111) and in a peripheral second pipe (113) along the inside of which the said central first pipe (111) runs and in which the acid gas to be treated flows at a pressure or an ejection rate that is lower than in the central first pipe (111).

7. Method according to at least one of Claims 4, 5 or 6, **characterized in that**:
- the top-up combustible gas is supplied with, in each supply tube (131) for this gas, a flow rate equal to less than 2% of the total flow rate of acid gas supplied, and/or
- the top-up combustible gas is supplied with a total flow rate across all of the supply tubes (131) for this gas equal to less than 7% of the total flow rate of acid gas supplied.

8. Method according to at least one of Claims 4, 5, 6 or 7, **characterized in that** gas is supplied by way of stream (110, 130) of acid gas that is to be treated at least one stream of gas containing between 20 vol% and 100 vol% of H₂S, between 0 vol% and 80 vol% of CO₂, and between 0% and 5% of at least one other gas that is neither the oxidizing air nor the top-up combustible gas.

9. Method according to at least one of Claims 4, 5, 6 or 7, **characterized in that** at least one additional gas, not mixed with the acid gas and which is neither the oxidizing air nor the top-up combustible gas is supplied in the said supply tubes (131).

10. Assembly comprising a burner (1) having a central axis (1a) and a first plane (P1) containing this axis, the burner (1) communicating with a substantially cylindrical furnace (15) having a peripheral wall (150) and itself having a central axis (15a) and a second plane (P2) containing a right cross section of the cylinder and which is oriented so as to intersect the first plane (P1) in a straight line, **characterized in that** the burner (1) is that according to one of Claims 1 to 3 and the said straight line intersects a radius of the furnace closer to the peripheral wall (150) than to the central axis (15a) of the furnace (15) so as to have a substantially tangential arrangement.

11. Assembly comprising a burner (1) having a central axis (1a) and communicating with a substantially cylindrical furnace (15) having a peripheral wall (150) and itself having a central axis (15a), **characterized in that** the burner (1) is the burner according to at least one of Claims 1 to 3, and the said central axes (1a, 15a) of the burner and of the furnace (15) are substantially coincident.
